(19) Europäisches Patentamt
European Patent Office
Office européen des brevets

(11) Publication number: 0 026 596
A1

# (12) EUROPEAN PATENT APPLICATION

(21) Application number: 80303176.4

(22) Date of filing: 10.09.80

(51) Int. Cl.[3]: C 09 B 29/09
D 06 P 1/18, D 06 P 3/00

(30) Priority: 26.09.79 GB 7933339

(43) Date of publication of application:
08.04.81 Bulletin 81/14

(84) Designated Contracting States:
BE CH DE FR GB IT LI

(71) Applicant: IMPERIAL CHEMICAL INDUSTRIES LIMITED
Imperial Chemical House Millbank
London SW1P 3JF(GB)

(72) Inventor: Fishwick, Brian Ribbons
69 Oakdale Drive, Heald Green, Cheshire
GB(GB)

(72) Inventor: Sayer, Trevor Stephen Beverly
Flat No.3 8 Oak Road Withington
Manchester M20 9DA(GB)

(74) Representative: Stephenson, Kenneth et al,
Imperial Chemical Industries Limited Legal Department:
Patents Thames House North Millbank
London SW1P 4QG(GB)

## (54) Disperse monoazo dyestuffs, their preparation and use for dyeing synthetic textile materials.

(57) Disperse monoazo dyes, free from sulphonic acid groups, which have the formula:

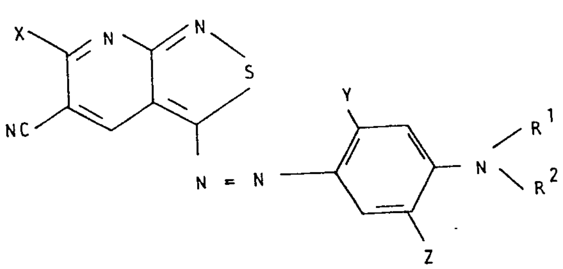

wherein X represents hydrogen, alkyl, alkoxy, alkoxyalkoxy, alkoxyalkoxyalkoxy or alkylthio; Y represents hydrogen, chlorine, bromine, alkyl, alkoxy, or acylamino; Z represents hydrogen, alkyl or alkoxy; $R^1$ represents hydrogen or an optionally substituted alkyl, alkenyl, aralkyl, cycloalkyl or aryl radical and $R_2$ represents hydrogen or an optionally substituted alkyl, alkenyl or aralkyl radical.

The dyes are useful for colouring polyester and other synthetic textile materials in bright blue and turquoise shades

EP 0 026 596 A1

This invention relates to disperse monoazo dyes and their applicatinn to textile materials.

According to the invention, there are provided disperse monoazo dyes, free from sulphonic acid groups, which have the formula:

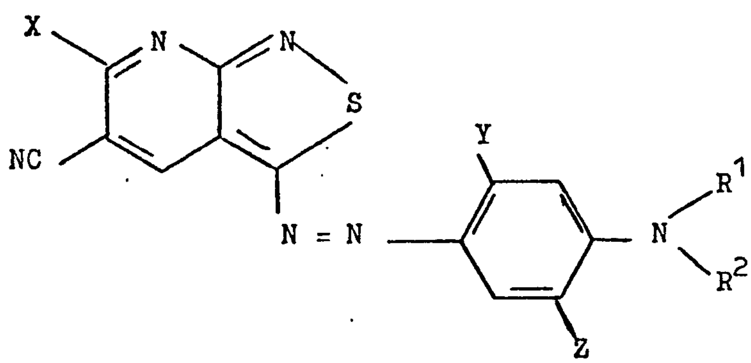

wherein X represents hydrogen, alkyl, alkoxy, alkoxyalkoxy, alkoxyalkoxyalkoxy or alkylthio; Y represents hydrogen, chlorine, bromine, alkyl, alkoxy, or acylamino; Z represents hydrogen, alkyl or alkoxy; $R^1$ represents hydrogen or an optionally substituted alkyl, alkenyl, aralkyl, cycloalkyl or aryl radical and $R^2$ represents hydrogen or an optionally substituted alkyl, alkenyl or aralkyl radical.

The alkyl, alkenyl, alkoxy and alkylthio radicals present in the dyes of the invention are preferably radicals containing up to four carbon atoms. Substituents which may be present on the alkyl radicals in the optionally substituted alkyl radicals represented by $R^1$ and $R^2$ include hydroxy, alkoxy, cyano, carboxy, alkoxycarbonyl, hydroxyalkoxy, alkoxyalkoxy, alkoxyalkoxycarbonyl, acyloxy and chloro.

Acylamino groups which may be represented by Y include groups of the formulae $-NHCOT^1$ and $-NHSO_2T^2$ wherein $T^1$ represents hydrogen, alkyl, alkoxy, aryl, amino, alkylamino or dialkylamino and $T^2$ represents $C_{1-4}$ alkyl or aryl.

Aryl groups which may be present in the dyes of the invention include phenyl and tolyl, aralkyl groups include benzyl and cycloalkyl groups include cyclohexyl and methylcyclohexyl.

Particular mention may be made of those dyes in which $R^2$ has the meaning given above and $R^1$ is hydrogen, an optionally substituted alkenyl, aralkyl, cycloalkyl or aryl radical or unsubstituted alkyl.

Especially valuable dyes are those in which at least one of $R^1$ and $R^2$ is an unsubstituted alkyl radical, the dyes in which both of $R^1$ and $R^2$ are unsubstituted alkyl being particularly important.

The dyes of the invention may be prepared by diazotising a primary amine of the formula:

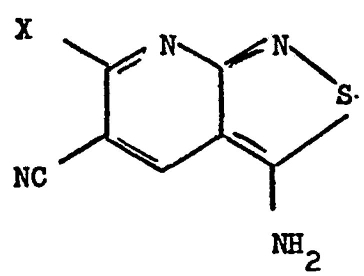

and coupling the resulting diazo compound with an arylamine coupling component of the formula:

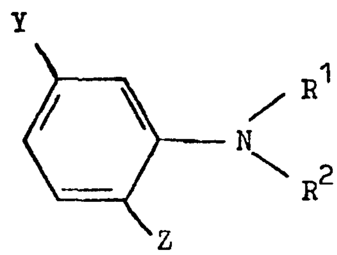

wherein X, Y, Z, $R^1$ and $R^2$ have the meanings given above, the amine and the coupling component being free from sulphonic acid groups.

The primary amines may themselves be prepared by the selective thiohydration of a compound of the formula:

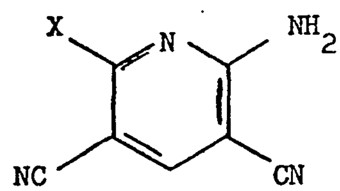

using an agent capable of yielding the hydrosulphide ion at a temperature of, for example, 0-25°C followed by hydrogen peroxide oxidation of the o-amino thioamide so obtained. Agents capable of yielding the hydrosulphide ion include hydrogen sulphide, ammonium hydrogen sulphide, ammonium sulphide and sodium hydrogen sulphide, the reaction conveniently being carried out in an aqueous or non-aqueous solvent, for example pyridine, and in the presence of a base, for example triethylamine.

As examples of coupling components for use in making the dyes of the invention there may be mentioned
N,N-diethyl-m-aminoacetanilide,
2,5-dimethoxyaniline,
N,N-diethylaniline,
N,N-di(β-hydroxyethyl)-m-toluidine,
N,N-di(β-cyanoethyl)-aniline,
N-ethyl-N-(β-ethoxyethyl)aniline,
N,N-di(β-carbomethoxyethyl)-m-toluidine,
N-[β-(β'-methoxyethoxycarbonyl)ethyl]-m-toluidine,
2-methoxy-5-acetylamino-N-[β-(β'-methoxyethoxycarbonyl)ethyl] aniline,
N-ethyl-N-(β-cyanoethyl)aniline,
N-ethyl-N-(δ-acetoxybutyl)aniline, and
N-ethyl-N-benzyl-m-toluidine.

The reactions leading to the formation of the dyes of the invention may be performed using conditions that have been fully described in the prior art for such reactions. Similarly the dyes may be isolated by known methods.

The dyes of the invention are valuable for colouring synthetic textile materials, in particular secondary cellulose acetate and cellulose triacetate textile materials, polyamide textile materials such as nylon 6 and nylon 66 textile materials and, above all, aromatic polyester textile materials such as polyethylene terephthalate textile materials. Such materials can be in the form of filaments, fibres or woven or knitted materials. The dyes may be applied to the synthetic textile materials by any of the methods conventionally employed for the application of disperse dyes to such materials.

When applied to synthetic textile materials, the dyes of the invention give blue to green shades having excellent fastness to light and to wet and dry treatments. The dyes also have excellent dyeing properties, particularly on aromatic polyester textile materials. The dyes can also be used for the mass coloration of synthetic polymers which are subsequently to be converted into fibres or filaments or they can be applied to synthetic textile materials by the process of transfer colour printing optionally at reduced air pressures or under wet or humid conditions.

The invention is illustrated but not limited by the following Examples in which all parts are by weight unless otherwise stated.

Example 1

To a stirred solution of 60 parts of 14/86 (by volume) propionic/acetic acid and 30 parts of nitrosyl sulphuric acid are slowly added 7.0 parts of 3-amino-5-cyanoisothiazolo[3,4-b]pyridine and diazotisation is continued for 3 hours at 0°C.

The clear red solution obtained is added to a rapidly stirred solution of 10 parts of N,N-diethyl-m-aminoacetanilide in 80 parts of 1M sulphamic acid and 300 parts of ice/water. To this solution is then added 100 parts of 4M sodium acetate solution to adjust the pH of the solution from 1.5 to 5.0 at which coupling occurs very quickly to give the dye which is removed by filtration and washed well with water giving 10.1 parts of pure dye of the formula:

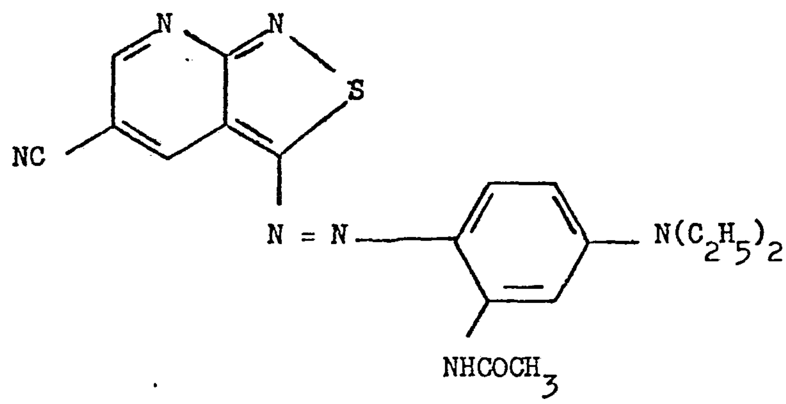

The dye so obtained, when dispersed in aqueous medium, dyes polyester textile substrates in turquoise shades having excellent fastness properties.

The 3-amino-5-cyanoisothiazolo[3,4-b]pyridine used in this Example is prepared as follows:-

15 Parts of 2-amino-3,5-dicyanopyridine, 150 parts of dry pyridine and 20 parts of triethylamine are stirred at 0°C and a steady stream of hydrogen sulphide gas is passed into the solution for 45 minutes. After this time, the reaction mixture is subjected to examination by thin layer chromatography and the reaction is judged to be complete.

The homogeneous solution is then poured into 1000 parts of ice-water and the product, which precipitates completely, is removed by filtration, washed with water and dried, giving 15.4 parts of 2-amino-3-thiocarbamoyl-5-cyanopyridine (83% of theoretical yield).

14 Parts of the 2-amino-3-thiocarbamoyl-5-cyanopyridine are suspended in 800 parts of methanol and heated to boiling with stirring. To this hot solution are added 250 parts of 30% aqueous hydrogen peroxide, rapidly. The suspension turns yellow and complete solution is obtained in 2 minutes. The product then precipitates from the hot aqueous methanol. After 2 minutes, the solution is cooled, diluted with 500 parts of water and the product isolated by filtration. The pure product is obtained as a yellow crystalline powder 13.1 parts (92% of theoretical yield).

Example 2

To a stirred solution of 60 parts of 14/86 (by volume) propionic/acetic acid and 30 parts of nitrosyl sulphuric acid are slowly added 6.0 parts of 3-amino-5-cyano-6-methyl isothiazolo[3,4-b]pyridine and diazotisation is continued for 3 hours at 0°C.

The clear red solution obtained is added to a rapidly stirred solution of 10 parts of N,N-diethyl-m-aminoacetanilide in 80 parts of 1M sulphamic acid and 300 parts of ice/water. To this solution is then added 100 parts of 4M sodium acetate solution to adjust the pH of the solution from 1.5 to 5.0 at which coupling occurs very quickly to give the dye which is removed by filtration.

The yield of dye is 11.6 parts of structure:

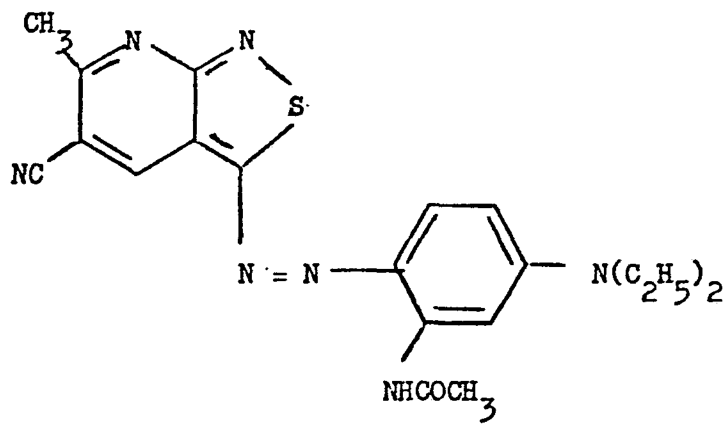

The 3-amino-5-cyano-6-methylisothiazolo[3,4-b] pyridine used in this Example is prepared as follows:-

20 parts of 2-amino-3,5-dicyano-6-methylpyridine, 100 parts of dry pyridine and 20 parts of triethylamine are stirred at 0°C and a steady stream of hydrogen sulphide gas is passed into the solution for 60 minutes. After this time, the reaction mixture is subjected to examination by thin layer chromatography and the reaction is judged to be complete.

The homogeneous solution is then poured into 1000 parts of ice water and the product, which precipitates completely, is removed by filtration, washed with water and dried, giving 23 parts of 2-amino-3-thiocarbamoyl-5-cyano-6-methylpyridine.

10 parts of 2-amino-3-thiocarbamoyl-5-cyano-6-methylpyridine are suspended in 500 parts of methanol and heated to boiling with stirring. To this hot solution are added 200 parts of 30% aqueous hydrogen peroxide, rapidly. The suspension turns yellow and complete solution is obtained in 2 minutes. The product then precipitates from the hot aqueous methanol. After a further 2 minutes, the solution is cooled, diluted with 500 parts of water

and the product isolated by filtration. The pure product is obtained as a yellow microcrystalline material 9.4 parts (98% of theoretical yield).

The following table gives Examples of other dyes of the invention which may be prepared in a similar manner. The dyes are identified by their substituents.

| Ex. | X | Y | Z | $R^1$ | $R^2$ | λmax ($CHCl_3$) | Shade on Polyester |
|---|---|---|---|---|---|---|---|
| 3 | H | methyl | H | ethyl | β-acetoxyethyl | 600 | Mid-blue |
| 4 | " | " | " | " | benzyl | 608 | " |
| 5 | " | acetylamino | " | allyl | allyl | 616 | " |
| 6 | " | methyl | " | ethyl | ethyl | 620 | " |
| 7 | " | acetylamino | " | iso-propyl | allyl | 620 | Turquoise |
| 8 | " | " | methoxy | H | $-CH(CH_3)-CH_2COOCH_2CH_3$ | 648 | " |
| 9 | " | " | " | " | iso-propyl | 650 | " |
| 10 | " | " | " | " | iso-pentyl | 654 | " |
| 11 | methyl | methyl | H | ethyl | β-cyanoethyl | 570 | Reddish-blue |
| 12 | " | " | " | " | β-acetoxyethyl | 595 | " |
| 13 | " | acetylamino | " | allyl | allyl | 608 | Mid-blue |
| 14 | " | methyl | " | ethyl | ethyl | 608 | " |
| 15 | " | " | " | " | iso-butyl | 610 | " |
| 16 | " | " | " | n-propyl | n-propyl | 611 | " |
| 17 | " | acetylamino | " | iso-propyl | allyl | 614 | " |
| 18 | methoxy | " | " | ethyl | ethyl | 612 | " |

| Ex. | X | Y | Z | $R^1$ | $R^2$ | λmax ($CHCl_3$) | Shade on Polyester |
|---|---|---|---|---|---|---|---|
| 19 | methoxy | methoxy | methoxy | H | $CH_3$<br>$-CH-CH_2COOCH_2CH_3$ | 618 | Mid-blue |
| 20 | " | " | " | " | iso-pentyl | 624 | Turquoise |
| 21 | " | acetylamino | " | H | $CH_3$<br>$-CH-CH_2COOCH_2CH_3$ | 640 | " |
| 22 | methylthio | " | H | ethyl | ethyl | 624 | " |
| 23 | " | " | methoxy | H | $CH_3$<br>$-CH-CH_2COOCH_2CH_3$ | 658 | Green |
| 24 | β-ethoxyethoxy | " | H | ethyl | ethyl | 609 | Mid-blue |
| 25 | β-(β-ethoxy-ethoxy)-ethoxy | " | " | " | " | 605 | " |
| 26 | H | methoxy | methyl | " | " | | Turquoise |
| 27 | " | Cl | methoxy | " | β-carboxyethyl | | Mid-blue |
| 28 | " | Br | methyl | " | β-hydroxyethyl | | " |
| 29 | " | H | H | n-butyl | β-ethoxyethyl | | Reddish-blue |
| 30 | " | acetylamino | " | n-propyl | β-(hydroxyethoxy) ethyl | | Mid-blue |

| Ex. | X | Y | Z | $R^1$ | $R^2$ | $\lambda max$ ($CHCl_3$) | Shade on Polyester |
|---|---|---|---|---|---|---|---|
| 31 | methyl | acetylamino | H | ethyl | β-acetoxyethyl | | Mid-blue |
| 32 | H | " | " | " | β-chloroethyl | | " |
| 33 | " | " | " | " | β-(acetoxy-carbonyl)ethyl | | " |
| 34 | " | " | " | H | H | | Turquoise |
| 35 | methoxy | " | " | ethyl | β-(β-ethoxy-ethoxy)ethyl | | Reddish-blue |
| 36 | methylthio | " | " | " | β-(β-ethoxy-ethoxycarbonyl) ethyl | | Mid-blue |
| 37 | H | " | " | phenyl | benzyl | | Turquoise |
| 38 | " | " | " | cyclohexyl | H | | " |
| 39 | " | " | " | benzyl | ethyl | | " |
| 40 | " | " | " | " | H | | " |
| 41 | methyl | $-NHSO_2CH_3$ | " | ethyl | ethyl | | " |
| 42 | H | $-NHSO_2Ph$ | " | " | " | | " |
| 43 | " | formylamino | " | " | " | | " |
| 44 | " | benzoylamino | " | n-propyl | n-propyl | | " |
| 45 | " | ureido | " | ethyl | ethyl | | " |

| Ex. | X | Y | Z | $R^1$ | $R^2$ | $\lambda max$ ($CHCl_3$) | Shade on Polyester |
|---|---|---|---|---|---|---|---|
| 46 | H | N,N-diethyl ureido | H | ethyl | ethyl | | Turquoise |
| 47 | " | $-NHCOOCH_3$ | methoxy | " | H | | " |
| 48 | methyl | ureido | H | " | β-cyanoethyl | | Mid-blue |
| 49 | " | $-NHSO_2CH_3$ | " | " | β-acetoxyethyl | | " |

CLAIMS

1 A disperse monoazo dye, free from sulphonic acid groups, which has the formula:

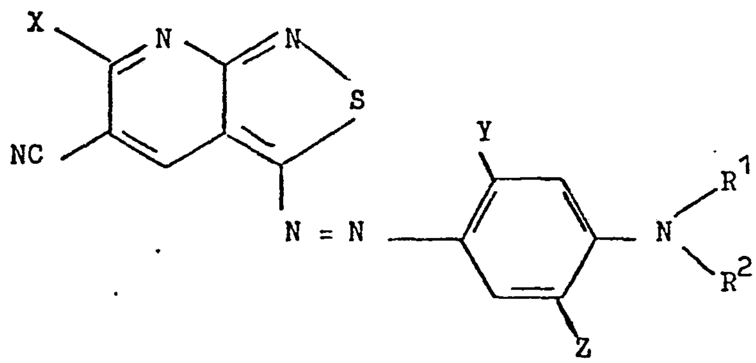

wherein X represents hydrogen, alkyl, alkoxy, alkoxyalkoxy, alkoxyalkoxyalkoxy or alkylthio; Y represents hydrogen, chlorine, bromine, alkyl, alkoxy, or acylamino; Z represents hydrogen, alkyl or alkoxy; $R^1$ represents hydrogen or an optionally substituted alkyl, alkenyl, aralkyl, cycloalkyl or aryl radical and $R^2$ represents hydrogen or an optionally substituted alkyl, alkenyl or aralkyl radical.

2. A disperse monoazo dye according to claim 1 wherein at least one of $R^1$ and $R^2$ is an unsubstituted alkyl radical.

3. A method for the preparation of a monoazo dye according to claim 1 which comprises diazotising a primary amine of the formula:

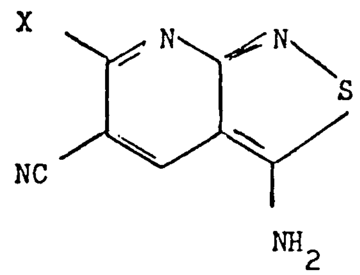

and coupling the resulting diazo compound with an arylamine coupling component of the formula:

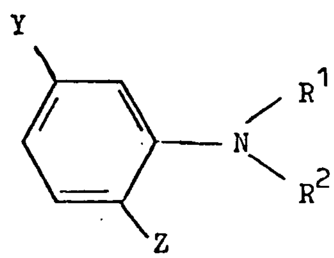

wherein X, Y, Z, $R^1$ and $R^2$ have the meanings given in claim 1 the amine and the coupling component being free from sulphonic acid groups.

4. A process for the coloration of synthetic textile materials which comprises applying thereto a disperse monoazo dye according to claim 1.

KS/BH
8.9.80.

0026596

European Patent Office

# EUROPEAN SEARCH REPORT

Application number
EP 80 30 3176

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| X | US - A - 4 081 435 (BAIRD, FISCHWICK, CAMPBELL, SMITH)<br>* Columns 1-3, complete; column 5, paragraphs 1 and 2; columns 9 and 10, examples 79, 80 and 82 *<br>----- | 1,3,4 | C 09 B 29/00<br>D 06 P 1/18<br>D 06 P 3/00 |
| | | | TECHNICAL FIELDS SEARCHED (Int. Cl.3) |
| | | | C 09 B 20/00<br>29/00<br>29/033<br>29/039<br>29/06<br>29/08 |
| | | | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | The present search report has been drawn up for all claims | | &: member of the same patent family, corresponding document |

| Place of search | Date of completion of the search | Examiner |
|---|---|---|
| The Hague | 14-01-1981 | GREEN |

EPO Form 1503.1 06.78